# FASCICULE DE BREVET EUROPEEN

(11) **EP 1 750 964 B1**
(45) Date de publication et mention de la délivrance du brevet: **15.10.2008**
(21) Numéro de dépôt: 05766701.6
(22) Date de dépôt: 26.05.2005
(51) Int. Cl.: B60K 6/387, B60K 6/485, F16D 48/02, F16D 25/10, F16D 25/12, F16H 61/30

(54) **ENSEMBLE FONCTIONNEL DE VEHICULE AUTOMOBILE COMPRENANT UN ELEMENT DE TRANSMISSION A EMBRAYAGES HUMIDES ET UN SYSTEME HYDRAULIQUE, ET VEHICULE AUTOMOBILE EQUIPE D'UN TEL ENSEMBLE FONCTIONNEL**
FUNKTIONELLE ANORDNUNG FÜR EIN KRAFTFAHRZEUG MIT NASSKUPPLUNGSGETRIEBEELEMENT UND EINEM HYDRAULIKSYSTEM SOWIE KRAFTFAHRZEUG DAMIT
FUNCTIONAL MOTOR VEHICLE ASSEMBLY COMPRISING A WET CLUTCH TRANSMISSION ELEMENT AND A HYDRAULIC SYSTEM, AND MOTOR VEHICLE EQUIPPED WITH SAME

(30) Priorité: 03.06.2004 FR 0406025
(43) Date de publication de la demande: 14.02.2007
(73) Titulaire: PEUGEOT CITROËN AUTOMOBILES S.A., 78140 Vélizy Villacoublay (FR)
(72) Inventeur: COMBES, Emmanuel, F-91410 SAINT-CYR-SOUS-DOURDAN (FR); DUBARRY, Christophe, F-91620 NOZAY (FR)
(86) Numéro de dépôt international: PCT/FR2005/050378
(87) Numéro de publication internationale: WO 2005/123432

(56) Documents cités:
- EP-A- 1 068 977
- EP-A- 1 231 414
- WO-A-96/05978
- DE-A- 4 337 816
- FR-A- 2 814 121

## Description

La présente invention concerne un ensemble fonctionnel de véhicule automobile comprenant
- au moins un système hydraulique doté d'un réservoir de fluide, d'un organe récepteur, et d'une pompe reliée d'une part audit réservoir et d'autre part audit organe récepteur, adaptée pour alimenter l'organe récepteur en fluide à partir du réservoir, et
- un élément de transmission comprenant un arbre d'entrée de mouvement destiné à être relié à un moteur thermique, un arbre de sortie de mouvement destiné à être relié à une boîte de vitesses, une machine électrique comportant un stator et un rotor, un premier embrayage de liaison entre l'arbre d'entrée et le rotor, et un second embrayage de liaison entre le rotor et l'arbre de sortie, lesdits embrayages étant de type humide, ledit élément de transmission comportant en outre un circuit de fluide de lubrification et/ou de refroidissement, et des moyens de commande desdits embrayages, qui comprennent un circuit de fluide de commande, le circuit de commande comprenant une chambre de pression pour chaque embrayage, telle que la pression de fluide de commande qui règne dans une chambre de pression détermine l'état de l'embrayage respectif.

Un élément de transmission du type décrit ci-dessus est utilisé dans la chaîne de traction de certains véhicules hybrides. Plus précisément, un tel élément peut être utilisé dans une chaîne de traction hydride parallèle.

On entend par chaîne de traction hybride parallèle une chaîne de traction fournissant à un arbre de roue une énergie mécanique à partir d'au moins un moteur de type « irréversible » (en général un moteur thermique) et d'au moins un moteur de type « réversible » (en général une machine électrique que l'on désignera aussi par le terme « moteur électrique », étant entendu que ce « moteur » pourra fonctionner suivant un mode moteur et un mode générateur), et dans laquelle le noeud d'énergie provenant des deux moteurs est de nature mécanique.

La demande de brevet français FR 2 814 121 décrit un ensemble fonctionnel du type ci-dessus, dont les circuits de commande et de lubrification et/ou refroidissement sont indépendants de tout autre système hydraulique du véhicule.

Il en résulte une architecture complexe de circuits hydrauliques, due à un nombre important d'organes tels que réservoirs ou pompes. De ce fait, l'encombrement général des circuits hydrauliques du véhicule, notamment au voisinage du groupe motopropulseur, est rendu pénalisant.

L'invention a pour objet de résoudre ces inconvénients, et de proposer un ensemble fonctionnel du type précédemment exposé, dont les circuits hydrauliques sont simplifiés et mettent en jeu un nombre réduit d'organes.

A cet effet, l'invention a pour objet un ensemble fonctionnel conforme à la revendication 1.

Suivant d'autres caractéristiques de l'invention, prises seules ou selon toutes les combinaisons techniquement envisageables :
- ledit système hydraulique est un système de lubrification et/ou de refroidissement d'un deuxième élément de transmission qui constitue l'organe récepteur, ou un système de direction assistée hydraulique dans lequel l'organe récepteur est un actionneur de direction assistée, ou un système de freinage hydraulique dans lequel l'organe récepteur est un frein, ou un système de suspension hydraulique dans lequel l'organe récepteur est un vérin hydraulique, et le circuit relié audit système hydraulique est le circuit de fluide de lubrification et/ou de refroidissement ;
- lesdits moyens de commande comprennent des moyens de rappel des deux embrayages en position fermée ;
- le circuit de commande est essentiellement distinct du circuit de lubrification et/ou de refroidissement ; et
- le fluide de commande est de nature différente du fluide de lubrification et/ou de refroidissement.

L'invention a également pour objet un véhicule automobile comportant un ensemble fonctionnel tel que décrit précédemment.

Un mode particulier de réalisation de l'invention va maintenant être décrit plus en détail en référence aux dessins annexés, sur lesquels :
- la Figure 1 est une vue partielle en demi-coupe axiale de l'élément de transmission d'un ensemble fonctionnel selon l'invention ;
- la Figure 2 est une vue de détail de la Figure 1, à plus grande échelle, qui représente un module de l'élément de transmission, comprenant essentiellement les embrayages, les arbres d'entrée et de sortie, l'organe intermédiaire et les pistons ; et
- la Figure 3 est un schéma d'un ensemble fonctionnel selon l'invention.

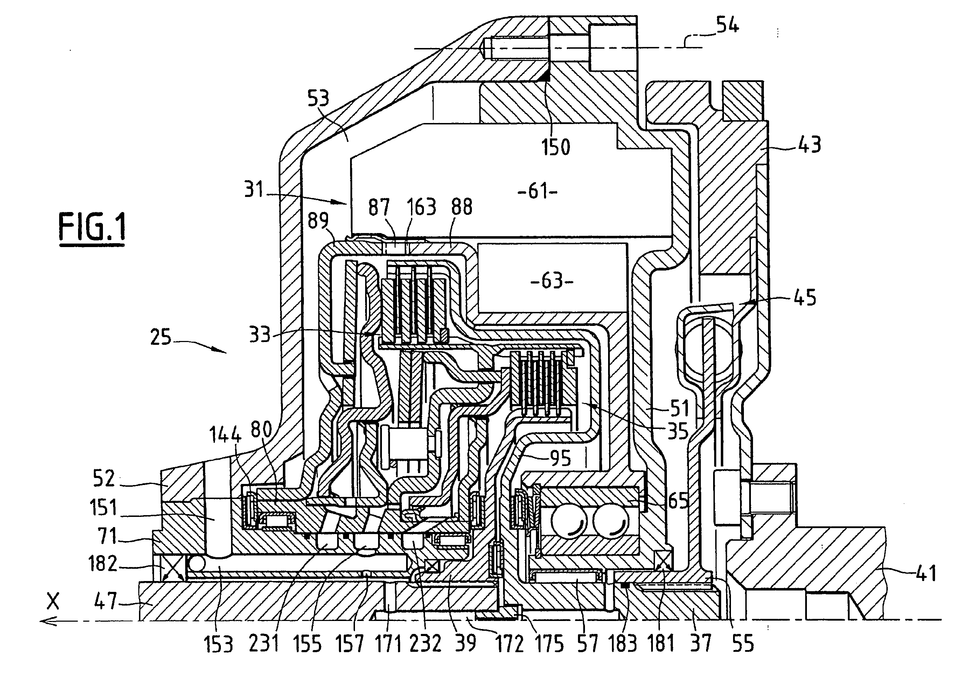

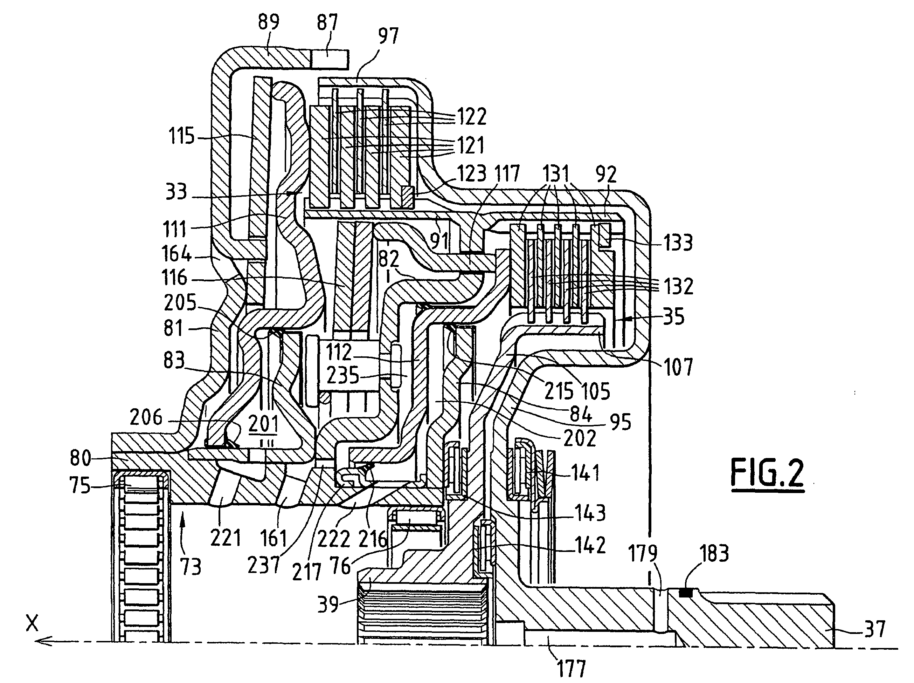

Sur les Figures 1 et 2, on a représenté un élément de transmission 25 conforme à l'invention, destiné à relier un moteur thermique à une boîte de vitesses. L'élément 25 de l'invention comporte une machine électrique 31, que l'on appellera « moteur électrique », un premier embrayage 33, et un deuxième embrayage 35.

L'élément de transmission 25 comporte en outre un arbre d'entrée de mouvement 37 et un arbre de sortie de mouvement 39 coaxiaux d'axe X. L'axe X est orienté de l'entrée vers la sortie pour la commodité de la description qui va suivre.

Les termes « amont » et « aval » s'entendront en référence à cette orientation.

L'arbre d'entrée 37 est solidaire en rotation du vilebrequin du moteur thermique, dont une partie, ou « nez », est représentée sur la Figure 1 sous la référence 41.

Dans l'exemple représenté, le vilebrequin 41 est muni d'un volant d'inertie 43, et relié à l'arbre d'entrée 37 par l'intermédiaire d'un dispositif amortisseur 45.

L'arbre de sortie 39 est lié en rotation à l'arbre primaire d'entrée de boîte de vitesses, dont une partie est représentée sur la Figure 1 sous la référence 47.

L'élément de transmission 25 comprend un carter constitué essentiellement d'une première demi-coquille 51 et d'une deuxième demi-coquille 52, assemblées par des moyens de fixation répartis sur la périphérie du carter et symbolisés sur la figure 1 par des lignes mixtes 54. Les demi-coquilles de carter 51, 52 délimitent intérieurement un logement 53, à l'intérieur duquel sont agencés le moteur électrique 31, les embrayages 33, 35 et les arbres d'entrée 37 et de sortie 39, de façon coaxiale.

L'arbre d'entrée 37 et l'arbre de sortie 39 sont montés rotatifs par rapport au carter 51, 52.

L'arbre d'entrée 37 est un arbre cannelé complémentaire d'un arbre creux 55 du dispositif amortisseur 45, et une partie d'extrémité de l'arbre d'entrée 37 fait saillie axialement de la première demi-coquille 51. L'arbre d'entrée 37 est monté rotatif sur la première demi-coquille 51 par l'intermédiaire d'un palier de roulement 57.

L'arbre de sortie 39 est un arbre creux à cannelures internes, de forme complémentaire de l'extrémité d'arbre d'entrée de boîte 47. Pour être mise en prise avec l'arbre de sortie 39, l'extrémité de l'arbre d'entrée de boîte 47 fait saillie à l'intérieur du logement 53.

Le moteur électrique 31 comprend un stator 61, pourvu d'un collecteur, solidaire de la première demi-coquille de carter 51, et un rotor 63 monté rotatif sur la première demi-coquille 51 par l'intermédiaire d'un roulement 65. Le rotor 63 est agencé radialement à l'intérieur du stator 61.

Les premier 33 et deuxième 35 embrayages sont de type humide, et l'élément de transmission 25 est muni d'un tube axial 71 de distribution de fluide de lubrification et de refroidissement ainsi que de commande. Ce tube 71 fait saillie à l'intérieur du logement 53 de la deuxième coquille de carter 52.

L'élément de transmission 25 comporte un organe intermédiaire de transmission 73 monté rotatif sur le tube 71, radialement à l'extérieur, par l'intermédiaire de deux roulements 75, 76.

L'organe intermédiaire 73 est formé essentiellement avec un moyeu 80, et quatre parois radiales 81, 82, 83, 84 décalées axialement les unes par rapport aux autres, et rendues solidaires du moyeu 80 par soudure pour les parois 81, 82, 84, et par frettage pour la paroi 83.

L'organe intermédiaire 73 est lié en rotation au rotor 63 par l'intermédiaire de dents axiales complémentaires 87 mutuellement en prise, et formées respectivement sur une partie périphérique du rotor 63, et sur une partie périphérique de la première paroi radiale 81.

La deuxième paroi radiale 82 est formée avec une couronne périphérique solidaire constituée d'une première demi-couronne 91 s'étendant dans la direction axiale aval, et d'une deuxième demi-couronne 92 s'étendant dans la direction axiale amont.

De façon correspondante, l'arbre d'entrée 37 est formé, de préférence d'une pièce, avec une paroi radiale 95 qui s'étend à l'intérieur du logement 53, et qui possède en périphérie une couronne axiale 97. La couronne axiale 97 s'étend de façon coaxiale et radialement extérieure par rapport à la demi-couronne aval 91. Le premier embrayage 33 est agencé entre ladite demi-couronne 91 et ladite couronne 97.

De la même façon, l'arbre de sortie 39 est formé, de préférence d'une seule pièce, avec une paroi radiale 105 qui s'étend à l'intérieur du logement 53, et qui présente à sa périphérie une couronne axiale 107. La couronne axiale 107 s'étend de façon coaxiale et radialement intérieure par rapport à la demi-couronne amont 92 de l'organe intermédiaire 73. Le deuxième embrayage 35 est agencé entre ladite demi-couronne 92 et ladite couronne axiale 107.

L'élément de transmission 25 comprend en outre un premier 111 et un deuxième 112 pistons d'actionnement respectivement du premier 33 et du deuxième 35 embrayages, ainsi qu'un premier 115 et un deuxième 116 organes-ressorts sollicitant respectivement le premier 111 et le deuxième 112 pistons en pression sur l'embrayage respectif 33, 35.

Entre le piston 112 et l'organe-ressort 116 est interposée, en appui axial, une entretoise présentant des doigts 117 essentiellement axiaux répartis sur la périphérie d'une couronne. Ces doigts 117 traversent la paroi 82.

Le premier embrayage 33 est essentiellement constitué d'une première série de disques 121 liés en rotation à la première demi-couronne 91 par des cannelures, et déplaçables axialement sur cette dernière, le long de ces cannelures, sous l'effet du piston 111 ; et d'une deuxième série de disques 122 liés en rotation à la couronne axiale 97 par des cannelures, et déplaçables axialement sur cette dernière, le long de ces cannelures également sous l'effet du piston 111. Les premiers 121 et deuxièmes 122 disques sont imbriqués les uns avec les autres de façon alternée.

Les disques 121, 122 sont arrêtés axialement par une butée 123 opposée au piston 111.

On comprend que les disques 121, 122 peuvent passer d'une position débrayée, dans laquelle les premiers disques 121 ne font pas contact avec les deuxièmes disques 122, et une position embrayée des premiers 121 et deuxièmes 122 disques dans laquelle les premiers 121 et deuxièmes 122 disques sont serrés les uns contre les autres.

Dans la position débrayée, l'arbre d'entrée 37 et l'organe intermédiaire 73 sont libres en rotation l'un par rapport à l'autre.

Le premier organe-ressort 115, constitué dans l'exemple représenté d'une rondelle-ressort, du type par exemple rondelle Belleville, est fixée à la première paroi radiale 81, et sollicite le piston 111 dans la position embrayée.

Le deuxième embrayage 35 est de constitution et de fonctionnement analogues au premier : il comprend une première série de disques 131 associée à la deuxième demi-couronne 92, et une deuxième série de disques 132 intercalés, associée à la couronne axiale 107. Le déplacement axial des disques 131, 132 est limité par une butée 133.

Dans l'exemple représenté, l'organe-ressort 116 est une double rondelle ressort, du type Belleville, fixée à la deuxième paroi 82. L'organe-ressort 116 sollicite le piston 112 vers la position embrayée du deuxième embrayage 35, par l'intermédiaire des doigts 117.

Comme on le voit sur la Figure 1, les deux embrayages 33, 35 sont décalés axialement et radialement suivant une disposition étagée ou « en escalier », à savoir que le premier embrayage 33 est disposé radialement à l'extérieur par rapport au deuxième embrayage 35. Ce dernier est agencé à l'intérieur du rotor 63.

L'élément de transmission 25 est en outre pourvu de butées à aiguilles, dont une première 141 est interposée axialement entre le roulement 65 et la paroi radiale 95 de l'arbre d'entrée 37 ; une deuxième 142 est interposée axialement entre la paroi radiale 95 et la paroi radiale 105 de l'arbre de sortie 39 ; une troisième 143 est interposée entre la paroi radiale 105 et la paroi radiale 84 de l'organe intermédiaire 73 ; et une quatrième 144 est interposée entre le moyeu 80 et un épaulement du tube 71.

Le tube de distribution de fluide 71 est adapté pour distribuer du fluide de lubrification et de refroidissement à l'intérieur de l'élément de transmission 25, c'est-à-dire à l'intérieur du logement 53. Ce dernier est fermé de façon étanche à ce fluide, notamment au niveau des jointures des deux demi-coquilles 51, 52 de carter, au moyen d'un joint périphérique 150.

Au voisinage de l'axe X, l'étanchéité de l'élément de transmission 25 au fluide de lubrification et de refroidissement est réalisée d'une part par un premier joint à lèvres 181, qui prend appui sur la première demi-coquille 51 et la surface extérieure de l'arbre creux 55, et par un deuxième joint à lèvres 182, qui prend appui sur la surface interne du tube 71 et sur les surfaces externes de l'arbre primaire d'entrée de boîte 47, et d'autre part par un joint torique 183 placé entre l'arbre d'entrée 37 et l'arbre creux 55.

Ce tube 71 présente, ménagé dans sa paroi, un premier canal radial 151 d'alimentation en fluide, un premier canal axial 153 de distribution relié audit canal d'alimentation 151, un orifice 155 ménagé entre le canal de distribution 153 et l'extérieur du tube 71, et un orifice 157 ménagé entre le canal de distribution 153 et l'intérieur du tube.

Le moyeu 80 de l'organe intermédiaire 73 est pourvu d'un canal 161 débouchant sur l'orifice 155, et mettant ainsi en communication le canal de distribution 153 et le logement 53.

En fonctionnement, le canal d'alimentation 151 est relié à un circuit, qui sera décrit plus loin, d'alimentation en fluide de refroidissement et de lubrification. Ce fluide est diffusé à l'intérieur du logement 53 via le canal de distribution 153, l'orifice 155, et le canal 161, de façon à lubrifier et refroidir le premier embrayage 33, le deuxième embrayage 35, et le moteur électrique 31.

On notera que le fluide de lubrification et de refroidissement est diffusé radialement vers le stator 61, grâce notamment au passage 163 ménagé au niveau des dents 87. Le dimensionnement de ce passage 163 permet de maîtriser le débit de fluide organisé entre la partie du logement 53 intérieure au rotor 63, et la partie extérieure dans laquelle est agencé le stator 61.

On notera également que la disposition relative des embrayages 33, 35, et du moteur électrique 31, permet, du fait de la centrifugation du fluide de lubrification et de refroidissement, de conserver le premier embrayage 33 dans un bain de fluide de lubrification et de refroidissement, en fonctionnement de l'élément de transmission 25, tandis que la région du deuxième embrayage 35 est le siège d'un brouillard de ce même fluide. L'intérêt de cette disposition est d'adapter la quantité de fluide, présente dans la région de chaque embrayage, notamment à l'énergie calorifique générée par ces embrayages.

Le bain de fluide, en général d'huile, dans lequel est conservé l'embrayage 33, est nivelé grâce à un passage 164 au niveau de la paroi radiale 81.

Le premier embrayage 33 étant soumis à des échauffements plus importants que le deuxième 35, il est en effet nécessaire d'organiser, au voisinage du premier embrayage, un débit de fluide de refroidissement nettement plus important.

Les échauffements plus importants de l'embrayage 33 par rapport à l'embrayage 35 sont dus aux phases de glissement, qui sont plus contraignantes pour le premier que pour le second. Par ailleurs, le fait de maintenir l'embrayage 35 dans un brouillard de fluide, plutôt que dans un bain, permet de réduire les efforts de traînée de ce fluide sur l'arbre primaire de boîte.

D'autre part, le fluide de refroidissement et de lubrification est distribué vers le palier 57 et le roulement 65 pour refroidir et lubrifier ces derniers, par l'intermédiaire successivement : du canal de distribution 153 ; de l'orifice 157 ; d'un passage radial 171 formé dans l'arbre primaire d'entrée de boîte 47 ; d'un canal axial 172 pratiqué dans cet arbre ; d'un ajutage 175 permettant de régler le débit de fluide ; d'un canal axial 177 formé dans l'arbre d'entrée 37; et enfin d'un passage radial 179 débouchant au voisinage du palier 57.

Le fluide distribué suivant ce cheminement s'écoule dans le logement 53, au travers du palier 57, vers le roulement 65 et le rotor 63, puis vers le stator 61. Le stator 61 et le rotor 63 sont donc refroidis et lubrifiés non seulement par du fluide ayant transité par l'orifice 155 et les passages 163, 164, mais également par du fluide ayant transité par l'orifice 157 et le cheminement précédemment détaillé. Ce fluide permet également de lubrifier les butées 141, 142, 143.

On va maintenant décrire les dispositions permettant de déplacer les pistons ou plateaux de pression 111, 112 et ainsi de faire passer les embrayages 33, 35 d'une position à une autre parmi leurs positions embrayée et débrayée.

Le premier piston 111 définit, avec la troisième paroi radiale 83 et la surface extérieure du moyeu 80, une première chambre de pression 201, tandis que le deuxième piston 112 définit, avec la quatrième paroi radiale 84 et la surface extérieure du moyeu 80, une deuxième chambre de pression 202.

La première chambre de pression 201 est rendue sensiblement étanche à un fluide de commande au moyen d'un joint à lèvres 205 fixé en périphérie de la paroi radiale 83, et portant sur une surface du piston 111, et d'un joint à lèvres 206 fixé sur un bord radialement interne du piston 111, et portant sur la surface extérieure du moyeu 80.

De façon analogue, la chambre de pression 202 est rendue sensiblement étanche par un premier joint 215 portant sur la paroi radiale 84 et le piston 112, et par un deuxième joint à lèvres 216 portant sur le piston 112 et la surface extérieure d'une pièce 217 rapportée sur le moyeu 80.

Chaque chambre de pression 201, 202 débouche dans l'alésage central du moyeu 80 via deux canaux respectifs 221, 222 de passage d'alimentation en fluide de commande, formés dans le moyeu 80.

Le tube de distribution de fluide 71 est pourvu, pour sa part, de deux canaux 231, 232 reliés à un circuit d'alimentation en fluide de commande via des canaux radiaux d'alimentation respectifs (non représentés) analogues au canal 151, et des canaux axiaux de distribution respectifs (non représentés) analogues au canal 153. Les canaux 231, 232 communiquent respectivement avec les passages 221, 222.

Dans l'exemple représenté, le fluide de commande est le même que le fluide de lubrification/refroidissement, les circuits de commande et de lubrification/refroidissement étant partiellement communs.

On comprend qu'à partir de la position initiale fermée de l'embrayage 33, 35, le passage à la position débrayée est réalisé par alimentation de la chambre de pression respective 201, 202 en fluide de commande sous pression. Le piston correspondant 111, 112 est alors déplacé axialement vers la direction aval, selon l'orientation de l'axe X (vers la gauche sur la figure 2), en comprimant l'organe ressort 115, 116 et en desserrant les empilages de disques 121, 122, 131, 132.

Sous l'effet du ressort 115, 116, le piston 111, 112 reprend sa position initiale lorsque l'on ramène la pression en fluide de commande dans la chambre de pression respective 201, 202 à sa valeur initiale basse. L'embrayage 33, 35 reprend alors sa position dite « naturellement fermée », c'est-à-dire embrayée, en l'absence d'alimentation de la chambre de pression 201, 202 en fluide de commande.

Il est entendu que les deux embrayages 33, 35 peuvent être actionnés indépendamment, et que la description qui précède relative au fonctionnement des embrayages 33, 35 s'applique à l'un et à l'autre de façon indépendante.

En outre, la pression de fluide de commande qui peut être délivrée aux chambres de pression 201, 202 peut varier sur une plage de valeurs, telle que l'embrayage correspondant 33, 35 peut être amené dans l'un parmi des états de transmission nulle (débrayée), totale (embrayée), ou partielle (glissante).

Il faut noter que la deuxième paroi radiale 82 et le piston 112 définissent entre eux une chambre de compensation 235, située du côté opposé à la deuxième chambre de pression 202 par rapport au piston 112. Cette chambre de compensation 235 est alimentée en fluide de lubrification et de refroidissement via le canal 161 et un orifice 237 ménagé dans la paroi radiale 82. Ainsi, à haut régime, les efforts supplémentaires engendrés sur le piston 112 par la centrifugation du fluide de commande contenu dans la deuxième chambre de pression 202 sont compensés, et le piston 112 fonctionne en permettant le passage, entre les disques 131, 132, du couple pour lequel il a été dimensionné. On peut également noter que le dimensionnement de l'embrayage 33, du piston 111, et du ressort 115, permet de s'affranchir d'une chambre de compensation pour la commande de cet embrayage 33.

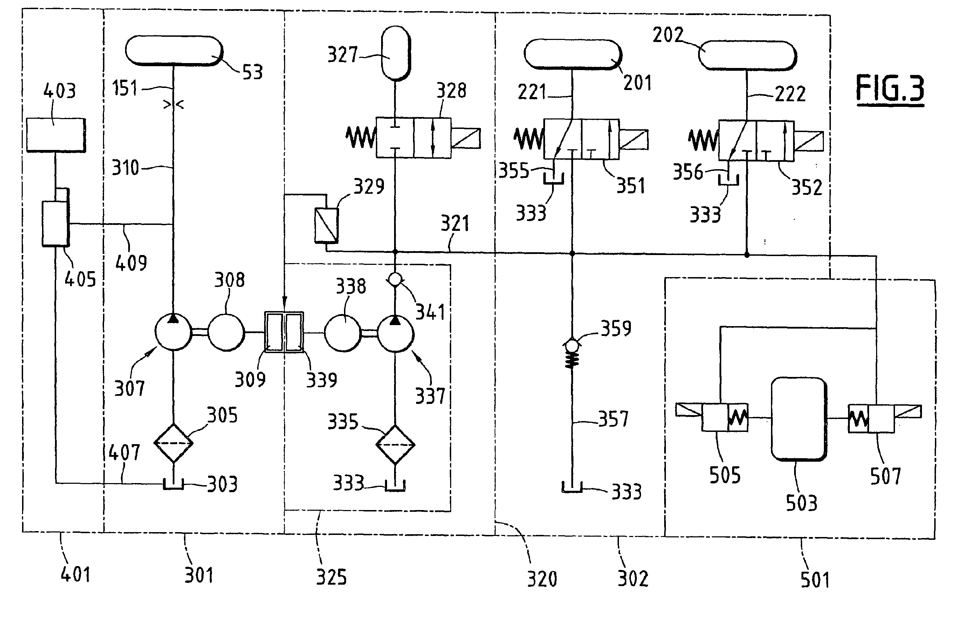

En référence à la Figure 3, on va maintenant décrire un ensemble fonctionnel selon l'invention.

Ce dernier comprend un élément de transmission tel que décrit précédemment, ainsi qu'un circuit hydraulique 302 de commande des embrayages 33, 35, et un circuit hydraulique 301 de refroidissement et de lubrification de l'élément de transmission 25.

L'ensemble fonctionnel comprend en outre un premier système hydraulique 401 du véhicule, relié au circuit de lubrification 301, et un deuxième système hydraulique 501 du véhicule, relié au circuit de commande 302.

Il ressort en premier lieu de la Figure 3 que le circuit de refroidissement et de lubrification 301 est distinct du circuit de commande 302.

Le circuit de refroidissement et de lubrification 301 comprend
- un réservoir 303 de fluide de refroidissement et de lubrification, tel que de l'huile,
- un élément de filtration (ou crépine) 305 placé en sortie dudit réservoir,
- une pompe basse pression 307 dotée d'un moteur 308 et d'une unité 309 de commande dudit moteur, et
- un conduit de lubrification 310 reliant la pompe 307 au logement 53 de l'élément de transmission 25, par l'intermédiaire du canal d'alimentation 151, et du tube de distribution de fluide 71.

Le circuit de commande 302 comprend une source de pression 320, munie d'une conduite de sortie 321 constituant une conduite d'émission de fluide de commande vers les chambres de pression 201, 202 des embrayages 33, 35.

La source de pression 320 comprend un générateur de pression 325, un accumulateur de pression 327, une électrovanne 328 reliant l'accumulateur de pression 327 à la conduite d'émission 321, et un capteur de pression d'émission 329, qui mesure la pression de fluide de commande régnant dans la conduite d'émission 321.

Le générateur de pression 325 comprend
- un réservoir de fluide de commande 333,
- un élément de filtration (ou crépine) 335 placé en sortie du réservoir,
- une pompe 337 haute pression, dotée d'un moteur 338 et d'une unité de commande 339 de ce de moteur.

Dans l'exemple représenté, l'unité de commande 339 du moteur de pompe haute pression et l'unité de commande 309 du moteur de pompe basse pression sont physiquement réunies en un même organe central de commande.

Le générateur de pression 325 comprend en outre un clapet anti-retour 341, par l'intermédiaire duquel la pompe haute pression 337 est reliée à la conduite d'émission 321, de telle sorte que le fluide de commande ne puisse circuler que de la pompe 337 vers la conduite d'émission 321.

L'électrovanne 328 est susceptible de prendre deux positions :
- dans la première position, de repos, correspondant à un mode de fonctionnement neutre de l'accumulateur 327, ce dernier est isolé de la conduite d'émission 321 (position représentée sur la Figure 3), et
- dans la deuxième position, active, l'accumulateur 327 est en communication avec la conduite d'émission 321, le fluide de commande pouvant s'écouler dans un sens ou dans l'autre. L'accumulateur fonctionne alors selon un mode récepteur ou un mode émetteur de fluide.

L'unité de commande 339 pilote le moteur 338 de façon à délivrer du fluide de commande dans la conduite d'émission 321, en vue de recharger l'accumulateur de pression 327, lorsque l'électrovanne 328 est dans sa deuxième position.

Le capteur de pression 329 est relié à l'unité de commande 339, ainsi qu'à l'unité de commande 309, permettant auxdites unités de commande de piloter les moteurs respectifs 338, 308 en fonction de la pression de fluide de commande régnant dans la conduite d'émission 321.

La conduite d'émission 321 est reliée à chacun des canaux 221, 222 de passage de fluide de commande, débouchant sur les chambres de pression respectives 201, 202, par l'intermédiaire d'électrovannes proportionnelles respectives 351, 352 à deux positions extrêmes.

Chacune de ces électrovannes 351, 352 du circuit de commande 302 peut prendre sélectivement une position parmi une position extrême de repos (représentée sur la Figure 3), une position extrême active, et des positions actives intermédiaires.

Dans la position de repos, la chambre de pression 201, 202 est mise en communication avec un circuit de décharge 355, 356, lequel peut déboucher par exemple dans le réservoir 333, et isolée de la conduite d'émission 321.

Dans les positions actives, la chambre de pression 201, 202 est mise en communication avec la conduite d'émission 321 de façon à pouvoir être alimentée en fluide de commande, tandis que le circuit de décharge 355, 356 est obturé au niveau de l'électrovanne 351, 352.

Le circuit de commande 302 comporte en outre un autre circuit de décharge 357 relié à la conduite d'émission 321 via une soupape de sécurité 359, prévue de façon à s'ouvrir et à mettre la conduite d'émission 321 en communication avec le circuit de décharge 357, lorsque la pression dans la conduite d'émission est supérieure à une valeur de seuil prédéterminée. Le circuit de décharge 357 peut être relié au réservoir de fluide de commande 333, de façon à recycler le fluide en excès dans la conduite d'émission 321.

On va maintenant décrire le fonctionnement du circuit de commande 302.

Les embrayages 33, 35 sont supposés, à l'état initial, dans leur position embrayée (ou fermée), la pression régnant dans les chambres de pression 201, 202 étant à une valeur basse P₀.

L'accumulateur de pression 327 doit, à chaque instant, être chargé de façon à pouvoir délivrer avec un temps de réponse très faible, dans les chambres de pression 201, 202, une pression de fluide dite « pression haute » P₁, suffisante pour déplacer les pistons 111, 112 jusqu'à amener les embrayages 33, 35 dans leur configuration débrayée (ou ouverte). Si tel n'est pas le cas, l'unité de commande 339 actionne le moteur de pompe 338, et l'électrovanne 328 est déplacée dans sa position active, de sorte que l'accumulateur de pression 327 est rechargé.

Lorsque l'un des embrayages 33, 35 doit être amené dans une position glissante, ou en position complètement débrayée, l'électrovanne correspondante 351, 352 est déplacée dans une position active adaptée. Simultanément, l'électrovanne 328 est également déplacée dans une position active. Le clapet anti-retour 341 empêchant le fluide contenu dans la conduite d'émission 321 de retourner vers le générateur 325, le fluide issu de l'accumulateur 327 est introduit dans la chambre de pression 201, 202, dans laquelle la pression atteint quasi-instantanément la valeur de consigne. A cette valeur de consigne est associée une position de la vanne proportionnelle respective 351 ou 352.

En particulier, la pression dans l'une ou l'autre des deux chambres peut atteindre quasi-instantanément la valeur haute P₁, qui constitue la valeur de commande de débrayage.

Bien entendu, les deux embrayages 33, 35 peuvent être actionnés de façon indépendante.

On comprend aussi que, si les deux embrayages 33, 35 doivent être amenés en position débrayée au même moment, les deux électrovannes 351, 352 sont manoeuvrées comme indiqué précédemment.

Dans l'exemple représenté, le premier système hydraulique 401 est un système de direction assistée hydraulique doté d'un actionneur 403, constituant un organe récepteur de fluide, d'une valve 405 d'alimentation et de décharge de l'actionneur 403, ainsi que d'un réservoir de fluide, et d'une pompe d'alimentation de l'actionneur en fluide sous pression à partir du réservoir.

Comme représenté sur la Figure 3, le réservoir 303 et la pompe 307 du circuit de lubrification 301 sont constitués respectivement du réservoir et de la pompe du premier système hydraulique 401 prévu sur le véhicule.

La valve de direction assistée hydraulique 405 est reliée d'une part au réservoir 403 par un canal de décharge 407, et d'autre part à la conduite de lubrification 310, en aval de la pompe 307, par un canal de charge 409.

Ainsi, le fluide utilisé dans le circuit de lubrification 301 est le même que le fluide utilisé dans le premier système hydraulique 401, de même que les composants de circuit hydraulique constitués du réservoir 303, de la crépine 305, et de la pompe 307, sont communs au circuit de lubrification 301 et au premier système hydraulique 401.

Suivant des variantes de réalisation de l'invention, le premier système hydraulique peut être constitué d'un système de refroidissement et de lubrification d'un autre élément de transmission, ce dernier constituant l'organe récepteur de fluide ; ou d'un système de freinage hydraulique, l'organe récepteur étant alors constitué d'un frein ; ou encore d'un système de suspension hydraulique, l'organe récepteur étant alors constitué d'un vérin hydraulique.

Le deuxième système hydraulique 501, relié au circuit de commande 302, est dans l'exemple représenté constitué d'un système de boîte de vitesses manuelle pilotée.

Ce système 501 comprend une boîte de vitesses manuelle pilotée 503, un actionneur de boîte de vitesses 505, et un actionneur de passage de boîte de vitesses 507. Les actionneurs 505, 507 constituent ensemble l'organe récepteur de fluide du deuxième système hydraulique 501.

Le deuxième système hydraulique 501 comprend en outre un réservoir de fluide, et une pompe permettant d'alimenter l'organe récepteur 505, 507 en fluide sous pression.

Chacun des actionneurs 505, 507 est relié à la conduite d'émission 321 du circuit de commande 302, de sorte que le réservoir 333 et la pompe haute pression 337 du circuit de commande 302 sont constitués respectivement du réservoir et de la pompe du deuxième système hydraulique 501 prévu sur le véhicule.

De façon analogue à ce qui a été décrit pour le circuit de lubrification 301 et le premier système hydraulique 401, le circuit de commande 302 et le deuxième système hydraulique 501 utilisent le même fluide de commande et ont des organes communs, qui sont essentiellement le réservoir 333, la crépine 335, et la pompe 337.

On comprend que la mise en commun de certains organes de circuits hydrauliques prévus de façon classique sur un véhicule, avec des circuits hydrauliques associés à un élément de transmission de chaîne de traction hybride, permet de simplifier considérablement l'architecture de ces circuits hydrauliques, ainsi que leur encombrement et leur coût. L'invention facilite également l'intégration, dans une chaîne de traction classique, d'un élément de transmission du type hybride.

## Revendications

1. Ensemble fonctionnel de véhicule automobile comprenant
- au moins un système hydraulique (401,501) doté d'un réservoir (303,333) de fluide, d'un organe récepteur (403,503), et d'une pompe (307,337) reliée d'une part audit réservoir (303,333) et d'autre part audit organe récepteur (403,503), adaptée pour alimenter l'organe récepteur (403, 503) en fluide à partir du réservoir (303, 333), et
- un élément de transmission comprenant un arbre (37) d'entrée de mouvement destiné à être relié à un moteur thermique, un arbre (39) de sortie de mouvement destiné à être relié à une boîte de vitesses, une machine électrique (31) comportant un stator (61) et un rotor (63), un premier embrayage (33) de liaison entre l'arbre d'entrée (37) et le rotor (63), et un second embrayage (35) de liaison entre le rotor (63) et l'arbre de sortie (39), lesdits embrayages (33,35) étant de type humide, ledit élément de transmission (25) comportant en outre un circuit (301) de fluide de lubrification et/ou de refroidissement, et des moyens de commande desdits embrayages (33,35), qui comprennent un circuit de fluide de commande (302), le circuit de commande (302) comprenant une chambre de pression (201,202) pour chaque embrayage (33,35), telle que la pression de fluide de commande qui règne dans une chambre de pression (201, 202) détermine l'état de l'embrayage respectif (33,35),
**caractérisé en ce qu'**un des systèmes hydrauliques (501) est un système de boîte de vitesses, notamment une boîte de vitesses manuelle pilotée (503), dans lequel l'organe récepteur (505,507) comprend un actionneur de sélection (505) et un actionneur de passage (507) de boîte de vitesses, le circuit (302) de fluide de commande est relié audit système de boîte de vitesses, de sorte que le fluide du circuit (302) de commande est identique au fluide du système de boîte de vitesses, et ledit circuit (302) de fluide de commande est alimenté en fluide à partir dudit réservoir (333) par ladite pompe (337).

2. Ensemble fonctionnel de véhicule automobile suivant la revendication 1, **caractérisé en ce qu'**un des systèmes hydrauliques est un système de lubrification et/ou de refroidissement d'un deuxième élément de transmission qui constitue l'organe récepteur, ou un système de direction assistée hydraulique (401) dans lequel l'organe récepteur est un actionneur (403) de direction assistée, ou un système de freinage hydraulique dans lequel l'organe récepteur est un frein, ou un système de suspension hydraulique dans lequel l'organe récepteur est un vérin hydraulique, et **en ce que** le circuit (301) de fluide de lubrification et/ou de refroidissement est relié au système de direction assistée hydraulique (401), ou au système de freinage hydraulique, ou au système de suspension hydraulique, de sorte que le fluide du circuit (301) de fluide de lubrification et/ou de refroidissement est identique au fluide du système de direction assistée hydraulique (401), ou du système de freinage hydraulique, ou du système de suspension hydraulique, et ledit circuit (301) de fluide est alimenté en fluide à partir dudit réservoir (303) par ladite pompe (307).

3. Ensemble fonctionnel suivant l'une quelconque des revendications 1 à 2, **caractérisé en ce que** lesdits moyens de commande comprennent des moyens de rappel (115, 116) des deux embrayages (33, 35) en position fermée.

4. Ensemble fonctionnel suivant l'une quelconque des revendications 1 à 3, **caractérisé en ce que** le circuit de commande (302) est essentiellement distinct du circuit (301) de lubrification et/ou de refroidissement.

5. Ensemble fonctionnel suivant l'une quelconque des revendications 1 à 4, **caractérisé en ce que** le fluide de commande est de nature différente du fluide de lubrification et/ou de refroidissement.

6. Véhicule automobile, **caractérisé en ce qu'**il comporte un ensemble fonctionnel suivant l'une quelconque des revendications 1 à 5.

## Claims

1. Motor vehicle functional assembly comprising
- at least one hydraulic system (401, 501) equipped with a fluid reservoir (303, 333), with a receiving member (403, 503), and with a pump (307, 337) connected on the one hand to the said reservoir (303, 333) and on the other hand to the said receiving member (403, 503) and designed to supply the receiving member (403, 503) with fluid from the reservoir (303, 333), and
- a transmission element comprising a movement input shaft (37) intended to be connected to a combustion engine, a movement output shaft (39) intended to be connected to a gearbox, an electric machine (31) comprising a stator (61) and a rotor (63), a first clutch (33) providing a connection between the input shaft (37) and the rotor (63), and a second clutch (35) providing a connection between the rotor (63) and the output shaft (39), the said clutches (33, 35) being of the wet type, the said transmission element (25) additionally comprising a lubricating and/or a cooling fluid circuit (301), and means for controlling the said clutches (33, 35), which means comprise a control fluid circuit (302), the control circuit (302) comprising a pressure chamber (201, 202) for each clutch (33, 35) such that the control fluid pressure in a pressure chamber (201, 202) determines the state of the respective clutch (33, 35),
**characterized in that** one of the hydraulic systems (501) is a gearbox system, in particular a semiautomatic manual gearbox (503), in which the receiving member (505, 507) comprises a gearbox selection actuator (505) and a gearbox shift actuator (507), the control fluid circuit is connected to the said gearbox system such that the fluid of the control circuit (302) is identical to the fluid of the gearbox system, and the said control fluid circuit (302) is supplied with fluid from the said reservoir (333) by means of the said pump (337).

2. Motor vehicle functional assembly according to Claim 1, **characterized in that** one of the hydraulic systems is a system for lubricating and/or cooling a second transmission element which constitutes the receiving member, or a hydraulic power-assisted steering system (401) in which the receiving member is a power-assisted steering actuator (403), or a hydraulic braking system in which the receiving member is a brake, or a hydraulic suspension system in which the receiving member is a hydraulic cylinder, and **in that** the lubricating and/or cooling fluid circuit (301) is connected to the hydraulic power-assisted steering system (401), or to the hydraulic braking system, or to the hydraulic suspension system, such that the fluid of the lubricating and/or cooling fluid circuit (301) is identical to the fluid of the hydraulic power-assisted steering system (401), or of the hydraulic braking system, or of the hydraulic suspension system, and the said fluid circuit (301) is supplied with fluid from the said reservoir (303) by means of the said pump (307).

3. Functional assembly according to either one of Claims 1 and 2, **characterized in that** the said control means comprise means (115, 116) for returning the two clutches (33, 35) to the closed position.

4. Functional assembly according to any one of Claims 1 to 3, **characterized in that** the control circuit (302) is essentially separate from the lubricating and/or cooling circuit (301).

5. Functional assembly according to any one of Claims 1 to 4, **characterized in that** the control fluid is different in type from the lubricating and/or cooling fluid.

6. Motor vehicle, **characterized in that** it comprises a functional assembly according to any one of Claims 1 to 5.

## Patentansprüche

1. Funktionseinheit für Kraftfahrzeug, die enthält:
- wenigstens ein Hydrauliksystem (401, 501), das mit einem Fluidvorratsbehälter (303, 333), einem Aufnahmeorgan (403, 503) und einer Pumpe (307, 337), die einerseits mit dem Vorratsbehälter (303, 333) und andererseits mit dem Aufnahmeorgan (403, 503) verbunden ist, versehen ist und dazu ausgelegt ist, das Aufnahmeorgan (403, 503) mit Fluid von dem Vorratsbehälter (303, 333) zu versorgen, und
- ein Kraftübertragungselement, das mit einer Bewegungseingangswelle (37), die dazu bestimmt ist, mit einer Brennkraftmaschine verbunden zu werden, einer Bewegungsausgangswelle (39), die dazu bestimmt ist, mit einem Schaltgetriebe verbunden zu werden, einem Elektromotor (31), der einen Stator (61) und einen Motor (63) enthält, einer ersten Kupplung (33) für die Verbindung der Eingangswelle (37) und des Rotors (63) und einer zweiten Kupplung (35) für die Verbindung des Rotors (63) und der Ausgangswelle (39) versehen ist, wobei die Kupplungen (33, 35) vom Nasskupplungstyp sind, wobei das Kraftübertragungselement (25) außerdem einen Schmierungs- und/oder Kühlungsfluidkreis (301) und Mittel zum Steuern der Kupplungen (33, 35), die einen Steuerfluidkreis (302) aufweisen, enthält, wobei der Steuerkreis (302) eine Druckkammer (201, 202) für jede Kupplung (33, 35) aufweist, damit der Steuerfluiddruck, der in einer Druckkammer (201, 202) herrscht, den Zustand der jeweiligen Kupplung (33, 35) bestimmt,
**dadurch gekennzeichnet, dass** eines der Hydrauliksysteme (501) ein Schaltgetriebesystem, insbesondere ein gesteuertes Wechselschaltgetriebe (503) ist, in dem das Aufnahmeorgan (505, 507) einen Wählaktor (505) und einen Wechselaktor (507) für das Schaltgetriebe enthält, wobei der Steuerfluidkreis (302) mit dem Schaltgetriebesystem in der Weise verbunden ist, dass das Fluid des Steuerkreises (302) mit dem Fluid des Schaltgetriebesystems identisch ist, und der Steuerfluidkreis (302) mit Fluid von dem Vorratsbehälter (333) durch die Pumpe (337) versorgt wird.

2. Funktionseinheit für Kraftfahrzeug nach Anspruch 1, **dadurch gekennzeichnet, dass** eines der Hydrauliksysteme ein Schmierungs- und/oder Kühlungssystem eines zweiten Kraftübertragungselements ist, das das Aufnahmeorgan bildet, oder ein hydraulisch unterstütztes Lenksystem (401) ist, in dem das Aufnahmeorgan ein unterstützter Lenkaktor (403) ist, oder ein hydraulisches Bremssystem ist, in dem das Aufnahmeorgan eine Bremse ist, oder ein hydraulisches Aufhängungssystem ist, in dem das Aufnahmeorgan ein Hydraulikkolben ist, und dass der Kreis (301) für Schmierungs- und/oder Kühlungsfluid mit dem hydraulisch unterstützten Lenksystem (401) oder mit dem hydraulischen Bremssystem oder mit dem hydraulischen Aufhängungssystem in der Weise verbunden ist, dass das Fluid des Schmierungs- und/oder Kühlungsfluidkreises (301) mit dem Fluid des hydraulisch unterstützten Lenksystems (401) oder des hydraulischen Bremssystems oder des hydraulischen Aufhängungssystems identisch ist, und der Fluidkreis (301) mit Fluid von dem Vorratsbehälter (303) durch die Pumpe (307) versorgt wird.

3. Funktionseinheit nach einem der Ansprüche 1 bis 2, **dadurch gekennzeichnet, dass** die Steuermittel Mittel (115, 116) zum Rückstellen der zwei Kupplungen (33, 35) in die eingerückte Position enthalten.

4. Funktionseinheit nach einem der Ansprüche 1 bis 3, **dadurch gekennzeichnet, dass** der Steuerkreis (302) von dem Schmierungs- und/oder Kühlungskreis (301) wesentlich verschieden ist.

5. Funktionseinheit nach einem der Ansprüche 1 bis 4, **dadurch gekennzeichnet, dass** das Steuerfluid von einer anderen Art als das Schmierungs- und/oder Kühlungsfluid ist.

6. Kraftfahrzeug, **dadurch gekennzeichnet, dass** es eine Funktionseinheit nach einem der Ansprüche 1 bis 5 enthält.
